Europäisches Patentamt

(19) European Patent Office

Office européen des brevets

(11) Publication number: **0 059 577**

A1

(12) **EUROPEAN PATENT APPLICATION**

(21) Application number: 82300878.4

(22) Date of filing: 22.02.82

(51) Int. Cl.³: **C 03 B 9/38**
C 03 B 9/193, G 05 D 16/20

(30) Priority: 27.02.81 GB 8106258

(43) Date of publication of application:
08.09.82 Bulletin 82/36

(84) Designated Contracting States:
BE DE FR IT

(71) Applicant: EMHART INDUSTRIES, INC.
426 Colt Highway
Farmington Connecticut 06032(US)

(72) Inventor: Jones, Stanley Peter
Strafford House Bride Church Lane
Tickhill Nr. Doncaster(GB)

(74) Representative: Drury, Peter Lawrence et al,
P.O. Box No. 88 Belgrave Road
Leicester LE4 5BX(GB)

(54) Control of the temperature of a plunger in a glassware forming machine.

(57) The temperature of a plunger (2) in a Glassware Forming Machine is controlled by sensing the temperature of cooling fluid which has left the plunger (2) and controlling the operation of plunger cooling means operable to pass the cooling fluid through the plunger (2) in accordance with the temperature sensed. The duration of the operation of the cooling means in the cycle of operation of the machine may be varied in accordance with the temperature sensed.

Fig. 1

Control of the temperature of a plunger
in a Glassware Forming Machine

## Technical Field

This invention is concerned with a method of controlling the temperature of a plunger in a Glassware Forming Machine which is used to press glass against a shaping surface of a mould cavity in the operation of the machine, the method comprising passing cooling fluid through the plunger.

The invention is also concerned with a plunger support assembly for a Glassware Forming Machine comprising a plunger support, moving means operable to move the support so that a plunger mounted on the support is moved into a mould cavity to press glass within the mould cavity against a shaping surface of the mould cavity and so that the plunger is subsequently retracted from the mould cavity, and plunger cooling means operable to pass cooling fluid through the plunger.

## Background Art

In the operation of a Glassware Forming Machine which is carrying out a "press and blow" method of making articles of glassware, "gobs" of molten glass are fed into a mould cavity. A plunger is then moved into the mould cavity to press the glass against a shaping surface of the mould cavity. The plunger is then retracted from the mould cavity and the shaped glass is removed for a subsequent blowing operation to be carried out thereon. Since the plunger comes into contact with molten glass, it becomes hot but it must not be allowed to become excessively hot or the glass will stick to the plunger. To avoid the plunger becoming excessively hot, it is cooled by plunger cooling means which causes the passage of cooling fluid, viz. air, through an internal passage in the plunger.

Hitherto, however, it has not been possible to control the operation of the plunger cooling means automatically because of the difficulty of gaining access to the plunger with temperature sensing means. The plunger cooling means has hitherto been controlled by an operator by a trial and error method with a consequent loss of production.

It is an object of the present invention to provide an automatic method of controlling the operation of cooling means for the plunger of a Glassware Forming Machine.

## Disclosure of Invention

In a method of controlling the temperature of a plunger according to the invention, the temperature of the cooling fluid after it has left the plunger is sensed and the flow of cooling fluid through the plunger is adjusted in accordance with the temperature sensed.

Preferably, the duration of the period during which cooling fluid is passed through the plunger in each cycle of the operation of the machine is adjusted in accordance with the sensed temperature.

In a plunger support assembly according to the invention, temperature sensing means is operable to sense the temperature of cooling fluid which has left the plunger, and control means is operable to control the operation of the plunger cooling means in accordance with the temperature sensed by the temperature sensing means.

In order to avoid the necessity for a plurality of control means, preferably the control means of the assembly is operable to receive signals from temperature sensing means of a plurality of plunger support assemblies of the Glassware Forming Machine and to control the operation of common plunger cooling means in accordance with the temperature sensed by the temperature sensing means of a selected one of the assemblies.

In order to detect a malfunction of the temperature sensing means, preferably the control means is operable to compare signals received from the temperature sensing means with a predetermined minimum value and, in the event of the signal not exceeding the minimum value, to generate an error signal.

In order to enable the machine to continue operation where the control means is operable to receive signals from the temperature sensing means of a plurality of plunger support assemblies, the control means is operable, upon generating an error signal, to change the one of the assemblies from which it receives the signal so that the plunger cooling means is controlled in accordance with the temperature sensed by the temperature sensing means of a different one of the assemblies.

## Brief description of drawings

In the accompanying drawings:

Figure 1 is a cross-sectional view of a plunger support assembly in accordance with the inventions; and

Figure 2 is diagrammatic view of control means of the plunger support assembly shown in Figure 1.

## Best mode of carrying out the invention

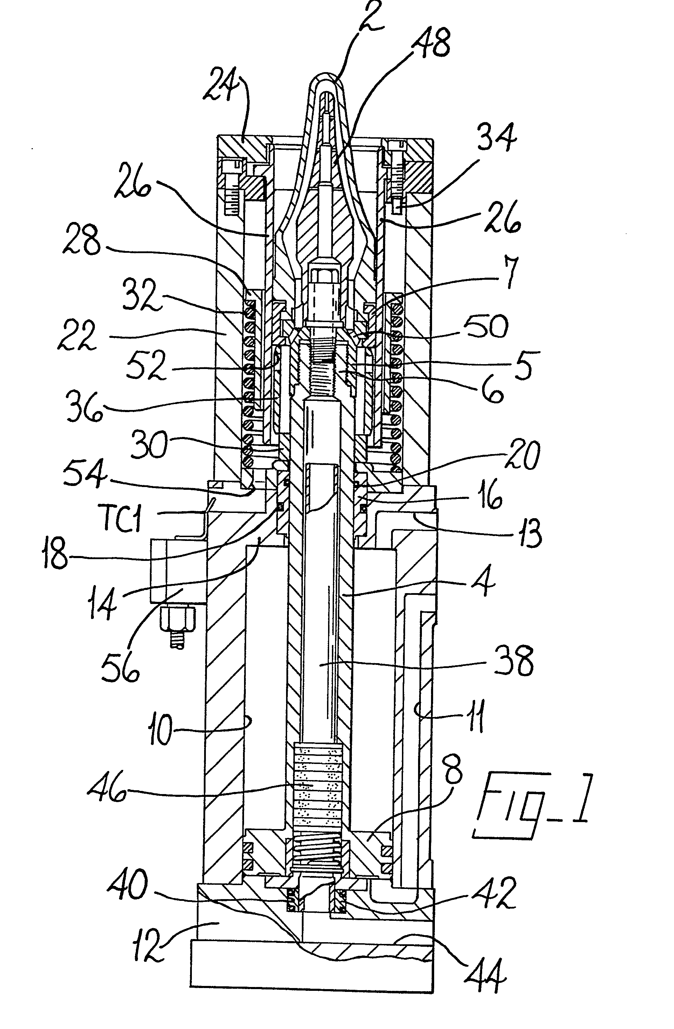

The plunger support assembly shown in Figure 1 is located at a moulding station of a glassware forming machine and is operable to move a plunger 2 into, and subsequently out of, a mould cavity (not shown). The assembly comprises a hollow cylindrical plunger support 4 which comprises a screw-threaded upper boss portion 6 onto which a clamping collar 5 is screwed. The clamping collar 5 holds a clamping ring 7 which clamps the plunger 2 to the support 4.

The plunger support 4 forms the piston rod of a piston 8 which is movable in a cylinder 10 mounted on a base 12 of the assembly. When air under pressure is introduced into the cylinder 10 beneath the piston 8 through an air passage 11, the piston 8 moves upwardly.in the cylinder 10 moving the support 4 and the plunger 2 upwardly so that the plunger 2 enters the mould cavity.  Introduction of air under pressure into the cylinder 10 above the piston 8 through an air passage 13 reverses this movement causing the plunger 2 to be withdrawn from the cavity.  The piston and cylinder assembly 8, 10 thus forms moving means operable to move the support 4 so that the plunger 2 is moved into the mould cavity to press glass within the mould cavity against a shaping surface of the mould cavity and so that the plunger 2 is subsequently retracted from the mould cavity.

The cylinder 10 has an upper cap 14 which closes its upper end except that the support 4 passes centrally through cap 14 through a hole which contains a bearing ring 16 on which the support 4 slides.  Two seals 18 and 20 seal the gaps between the ring 16 and the cap 14 and between the ring 16 and the support 4.  The boss portion 6 of the support 4 is always above the cap 14 in a cylinder 22 supported by the cap 14.

The cylinder 22 has an upper end cap 24 which supports a sleeve 26 within the cylinder 22 in which the plunger 2 is movable.  The end cap 24 has a central hole therein through which the plunger 2 passes.  The sleeve 28 is movable in the annular space between the cylinder 22 and the sleeve 26 and is attached, by connectors (not shown) which pass through longitudinal slots (not shown) in the sleeve 26, to a ring 30 which surrounds the support 4 and is slidable longitudinally thereon.  The sleeve 28 is urged towards the end cap 24 by compression spring 32 and its movement is limited by engagement of the top of the sleeve 28 with an adjustable stop screw 34 carried by the end cap 24 and by engagement of the ring 30 with the top of the end cap 14 of the cylinder 10.  The annular space between the support 4 and the sleeve 26 contains a spacing ring 36 which rests on the ring 30 and is engag- able with the clamping ring 7.

When air under pressure is introduced into the cylinder 10 through the air passage 13, the support 4 moves the plunger 2 away from the mould cavity. As this occurs, the clamping ring 7 engages the spacing ring 36 and pushes it and the ring 30 towards the end cap 14; this movement causes the sleeve 28 to compress the spring 32. When the ring 30 engages the end cap 14, the movement ceases (this condition is shown in Figure 1). Upon removal of the supply of air under pressure to the passage 13, the spring 32 moves the sleeve 28 and the ring 30 towards the mould cavity until the sleeve 28 engages the stop screw 34. As the ring 30 moves, it pushes with it the spacing ring 36, the clamping collar 7 and the support 4. Next, air under pressure is introduced into the cylinder 10 through the air passage 11 and the support 4, leaving the ring 30 behind, moves the plunger 2 into the mould cavity.

A tube 38 extends upwardly from the base 12 centrally of the cylinder 10. The tube 38 is mounted in a recess 40 in the base 12 which contains a sealing member 42 which seals the gap between the base 12 and the tube 38. The tube 38 communicates with an air passage 44 through the base 12. The tube 38 also extends through a central hole in the piston 8 into the hollow interior of the support 4, a bearing and seal 46 acting to seal the gap between the tube 38 and the piston 8.

The tube 38 forms part of plunger cooling means of the assembly operable to pass cooling fluid, viz. air, through the plunger 2. The plunger cooling means comprises a fan( not shown) which operates to blow air into the air passage 44. The air passes from the air passage 44 into the tube 38 and from thence into the hollow interior of the support 4. From the support 4, the air passes into a hollow interior portion 48 of the plunger 2 which is mounted on top of the support 4. The air then passes within the portion 48 to the end portion of the plunger 2 and then to the opposite end of the plunger 2 outside the portion 48. From the plunger 2, the air passes through air passages 50 in the clamping collar 5 into the space between the support 4 and the spacing ring 36. Then the air passes through air passages 52 in the spacing ring 36 and within the sleeve 26 to a passage 54 in the end cap 14. The air leaves the assembly through the passage 54.

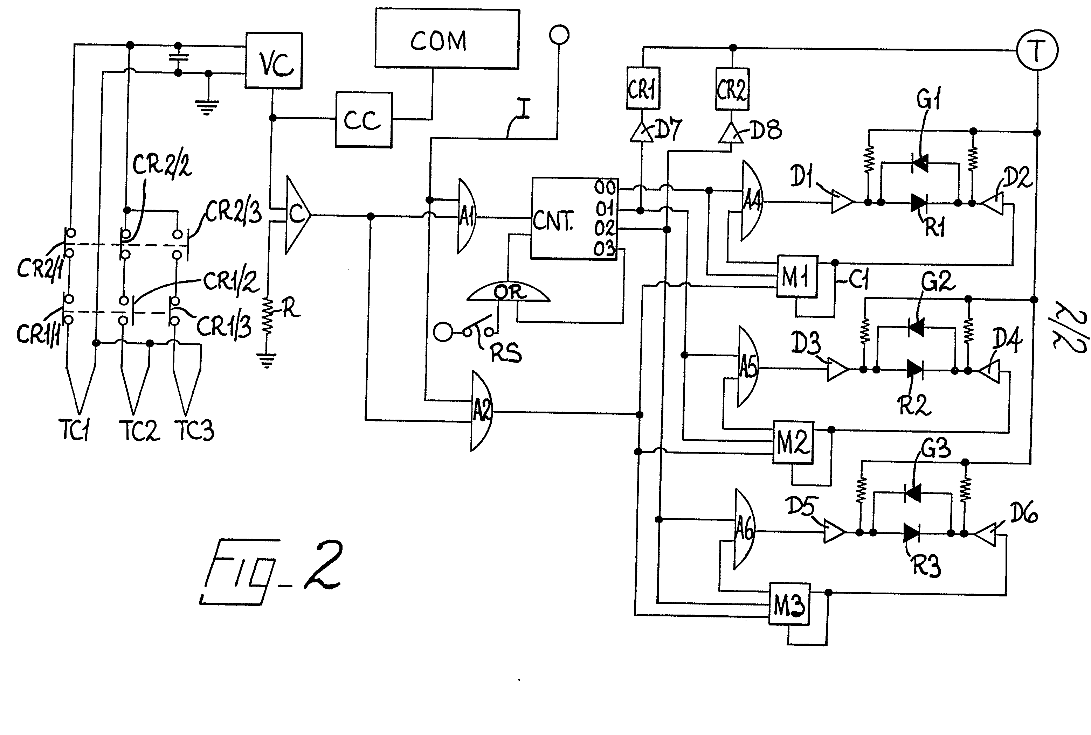

The plunger support assembly also comprises temperature sensing means in the form of a thermocouple TC1 located in the passage 54 and mounted on a support member 56 secured to the cylinder 10. The thermocouple TC1 is operable to sense the temperature of the cooling air which has left the plunger 2. The thermocouple TC1 sends its output signal to control means shown in diagrammatic form in Figure 2. The control means is operable to control the operation of the plunger cooling means in accordance with the temperature sensed by the thermocouple TC1. The control means does this by operating a valve which controls the air flow from the fan so as to vary the duration of the period during which cooling air is passed through the plunger 2 in each cycle of operation of the Glassware Forming Machine.

The control means (Figure 2) comprises the computer COM which controls the points in the operating cycle of the machine at which the valve controlling the air flow from the fan is turned on and off. The computer COM is operable to receive signals from the thermocouples TC1, TC2 and TC3 of the plunger support assembly shown in Figure 1 and two other identical plunger support assemblies mounted in the same Glassware Forming Machine. The aforementioned valve of the plunger cooling means is operable to control the duration of air flow to all three of the plunger support assemblies so that the assemblies have a common plunger cooling means. The computer COM controls the valve in accordance with the temperature sensed by the thermocouple of a selected one of the three assemblies. As will appear from the description below, the control means is operable to compare signals received from the thermocouple with a predetermined minimum value. This is done in order to ascertain whether the thermocouple is functioning correctly, and, in the event of the signal not exceeding the minimum value, an error signal is generated. Upon generating an error signal, the control means is operable to change said one of the assemblies from which it receives the signal so that the plunger cooling means is controlled in accordance with the temperature sensed by the thermocouple of a different one of the assemblies.

The control means comprises two relays CR1 and CR2 which respectively operate two sets of relay contacts CR1/1, CR1/2 and CR1/3, and CR2/1, CR2/2 and CR2/3. The contacts are connected between the thermocouples TC1, TC2 and TC3 and a voltage converter VC which also provides cold junction compensation for the thermocouples. The relay contacts are so arranged that, if neither of the relays CR1 and CR2 is energised, the thermocouple TC1 is connected to the voltage converter VC, if the relay CR1 only is energised, the thermocouple TC2 is connected to the voltage converter VC, and, if the relay CR2 only is energised, the thermocouple TC3 is connected to the voltage converter VC. Thus, only one of the thermocouples TC1, TC2 and TC3 is connected to the voltage converter VC at any one time but energising one or other of the relays CR1 and CR2 can alter which thermocouple is so connected.

The voltage converter VC amplifies the voltage it receives from the thermocouple and passes its output to a current converter CC and to a comparator C. The current converter CC passes a current proportional to the voltage it receives, and hence proportional to the temperature indicated by the thermocouple, to the computer COM. The computer COM is arranged to read the signal it receives at a particular point in each cycle of operation of the machine. This particular point is conveniently a point at which the piston and cylinder assembly 8, 10 is operated and a signal indicating when this occurs is suppied to the control means on an input line I which is connected to inputs of two AND GATES A1 AND A2 of the control means.

The comparator C of the control means acts to compare the signal it receives from the voltage converter VC with a predetermined minimum value determined by a resistor R connected between the comparator C and earth. If the signal exceeds the predetermined minimum value, indicating that the thermocouple is producing an acceptable signal, the comparator C produces no output but, in the event of the signal not reaching the minimum value, indicating a malfunction of the thermocouple or a break in the electrical connections thereto, the comparator C acts to send an electrical signal to the AND GATES A1 AND A2.

When the AND GATE A1 receives simultaneously a signal from the line I and a signal from the comparator C, indicating that the thermocouple is not producing an acceptable signal at the particular point in the cycle of operation of the machine, it sends an electrical signal to a counter CNT thereby generating an error signal which will cause the control means to change the thermocouple TC1, TC2 or TC3 whose signal it reads. Meanwhile AND GATE A2, having also received a signal from both the lines I and the comparator C sends a signal to each of three memories M1, M2 and M3, one of which is associated with each thermocouple. The memories M1, M2 and M3 are operable to cause an optical error signal to be generated, the optical error signal being generated continuously until the memory is re-set.

The counter CNT is provided with four outputs and is arranged to produce a signal on one of these outputs at a time in accordance with how many signals it has received from the AND GATE A1. If the counter CNT has received no signals, it produces a signal on an output OO thereof which is passed to an AND GATE A4 and to the memory M1. While the memory M1 is receiving this signal, it sends an output to the AND GATE A4 which then sends a signal to a driver D1 which thereupon allows current to pass from a terminal T through a light emitting diode G1 arranged to emit green light to indicate that the thermocouple TC1 is functioning correctly. If, however, the comparator C detects an inadequate signal, the AND GATE A2 passes a pluse to the memory M1 causing it to remove its output from the AND GATE A4 and to send its output instead to a driver D2 which there upon allows current to pass from the terminal T through a light emitting diode R1 arranged to emit red light which forms an optical error signal. The comparator C also causes a signal from the AND GATE A1 to reach the counter CNT which then transfers its output to an output O1 thereof. The driver D2 will continue to cause the diode R1 to emit the error signal until the memory M1 is re-set, since the signal to the driver D2 is locked on by a connection C1 to the memory M1.

The output O1 is connected to an AND GATE A5 and the memory M2 which functions in the same manner as the memory M1 in relation to the AND GATE A5, two drivers D3 and D4 and two light emitting diodes G2 and R2. In addition, however, the output O1 is connected to a driver D7 which allows current to flow from the terminal T through the relay CR1 and thus to switch the contact CR1/1, CR1/2 and CR1/3 thereby disconnecting the thermocouple TC1 from the voltage converter VC and connecting the thermocouple TC2 to the voltage converter VC. If the compartor C detects an inadequate signal, the counter CNT transfers its output to an output O2 thereof which is connected to the memory M3, and AND GATE A6, and a driver D8 which acts to cause current to flow through the relay CR2; this disconnects the thermocouple TC2 but connects the thermocouple TC3 to the voltage converter VC. The memory M3 acts in the same way as the memories M1 and M2 do in respect of the AND GATES A4 and A5, the drivers D1, D3, D2 and D4 and the light emitting diodes G1, R1, G2 and R2 but in respect of the AND GATE A6, two drivers D5 and D6 and two light emitting diodes G3 and R3. The drivers D2, D4 and D6 are arranged to continue to operate after once having received a signal from the AND GATES A4, A5 and A6 so that the diodes R1, R2 and R3 will indicate that their associated thermocouples have failed to produce an adequate signal.

When the signal CNT receives its third signal from the AND GATE A1 it transfers its output to an output O3 thereof, thereby denergising the relay CR2 and causing the thermocouple TC1 to be re-connected to the voltage converter VC. The output O3 is connected to an OR GATE OR (also connected to a re-set switch RS) which re-sets the counter CNT so that its output is transfered to the output OO. The sequence of operation of the counter CNT can then begin again.

Using the plunger support assembly, a method of controlling the temperature of the plunger 2 is carried out, the method comprising passing cooling air through the plunger 2, sensing the temperature of the cooling air leaving the plunger 2, and adjusting the operation of the plunger cooling means in accordance with the temperature sensed. Thus, an automatic method of controlling the operation of cooling means for the plunger of a Glassware Forming Machine is provided.

Claims:

1.          A method of controlling the temperature of a plunger (2) in a Glassware Forming Machine
which is used to press glass against a shaping surface of
a mould cavity in the operation of the machine, the method
comprising passing cooling fluid through the plunger (2),
characterised in that the temperature of the cooling fluid
after it has left the plunger (2) is sensed and the flow
of cooling fluid through the plunger (2) is adjusted in
accordance with the temperature sensed.

2.          A method according to claim 1,
characterised in that the duration of the period during
which the cooling fluid is passed through the plunger (2)
in each cycle of operation of the machine is adjusted in
accordance with the temperature sensed.

3.          A plunger support assembly for a
Glassware Forming Machine comprising a plunger support (4),
moving means (8, 10) operable to move the support so that
a plunger (2) mounted on the support (4) is moved into a
mould cavity to press glass within the mould cavity against
a shaping surface of the mould cavity and so that the
plunger (2) is subsequently retracted from the mould
cavity, and plunger cooling means operable to pass cooling
fluid through the plunger (2), characterised in that the
assembly comprises temperature sensing means (TC1) operable
to sense the temperature of cooling fluid which has left
the plunger (2), and control means operable to control the
operation of the plunger cooling means in accordance with
the temperature sensed by the temperature sensing means
(TC1).

4.          A plunger support assembly according
to claim 3, characterised in that the control means is
operable to adjust the plunger cooling means so as to vary
the duration of the period during which cooling fluid is passed through the plunger (2) in each cycle of operation of the machine in accordance with the temperature sensed by the temperature sensing means (TC1).

5.          A plunger support assembly according to either one of claims 3 and 4, characterised in that the control means of the assembly is operable to receive signals from temperature sensing means (TC1, TC2, TC3) of a plurality of plunger support assemblies of the Glassware Forming Machine and to control the operation of common plunger cooling means in accordance with the temperature sensed by the temperature sensing means (TC1, TC2, TC3) of a selected one of the assemblies.

6.          A plunger support assembly according to any one of claims 3 to 5, characterised in that the control means is operable to compare signals received from the temperature sensing means (TC1, TC2, TC3) with a predetermined minimum value and, in the event of this signal not exceeding the minimum value, to generate an error signal.

7.          A plunger support assembly according to claim 6 as appended to claim 5, characterised in that the control means is operable, upon generating an error signal, to change the one of the assemblies from which it receives the signal so that the plunger cooling means is controlled in accordance with the temperature sensed by the temperature sensing means (TC1, TC2, TC3) of a different one of the assemblies.

0059577

1/2

Fig_1

FIG-2

0059577

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 171 731 (BARGER) *Figures 2,3; column 5, lines 14-75* | 1,3 | C 03 B 9/38 C 03 B 9/193 G 05 D 16/20 |
| | --- | | |
| A | US-A-3 231 355 (DONNELLY) *Figure 1; column 2, lines 21-72* | 1,3 | |
| | --- | | |
| A | US-A-3 508 893 (DUGGAN) *Complete specification* | 1,3 | |
| | --- | | |
| A | US-A-3 147 105 (ABBOTT) *Complete specification* | 1,3 | |
| | ----- | | |

**TECHNICAL FIELDS SEARCHED (Int. Cl. ³)**

C 03 B 9/00
C 03 B 11/00
G 05 D 16/00

The present search report has been drawn up for all claims

| Place of search THE HAGUE | Date of completion of the search 22-04-1982 | Examiner VAN DEN BOSSCHE W.L. |
|---|---|---|